# EUROPÄISCHE PATENTSCHRIFT

(11) **EP 4 291 513 B1**
(45) Veröffentlichungstag und Bekanntmachung des Hinweises auf die Patenterteilung: **15.01.2025**
(21) Anmeldenummer: 22702993.1
(22) Anmeldetag: 02.02.2022
(51) Int. Cl.: B65G 1/04, A62B 35/00

(54) **ANLAGE ZUM FÖRDERN UND LAGERN VON TRANSPORTGÜTERN**
INSTALLATION FOR CONVEYING AND STORING TRANSPORT ITEMS
INSTALLATION DE TRANSPORT ET DE STOCKAGE D'ARTICLES DE TRANSPORT

(30) Priorität: 10.02.2021 DE 202021100652 U
(43) Veröffentlichungstag der Anmeldung: 20.12.2023
(73) Patentinhaber: Buck, Martin, 27404 Zeven-Wistedt (DE)
(72) Erfinder: Buck, Martin, 27404 Zeven-Wistedt (DE)
(74) Vertreter: Glawe, Delfs, Moll
(86) Internationale Anmeldenummer: PCT/EP2022/052466
(87) Internationale Veröffentlichungsnummer: WO 2022/171499

(56) Entgegenhaltungen:
- EP-A1- 3 613 680
- WO-A2-2013/006879
- DE-A1- 102014 012 254

## Beschreibung

Gegenstand der vorliegenden Erfindung ist eine Anlage zum Fördern und Lagern von Transportgütern. Die Anlage umfasst ein Gestell, das zumindest einen Transportgang und mehrere in den Transportgang einmündende Lagerkanäle aufweist. In die Lagerkanäle kann ein Transportgut oder mehrere Transportgüter hintereinander eingelagert werden. Die Anlage umfasst weiterhin einen Transportwagen, der entlang des Transportgangs bewegbar ist und der dazu ausgebildet ist, die Transportgüter entlang des Transportgangs zu bewegen und in die Lagerkanäle einzulagern oder aus den Lagerkanälen auszulagern. Der Transportgang umfasst zwei in Längsrichtung des Transportgangs verlaufende Schienen für den Transportwagen.

Anlagen dieser Art sind beispielsweise aus den Dokumenten DE 200 080 73 U1, DE 299 050 13 U1, DE 20 2006 010 489 U1, oder grundsätzlich bekannt. Bei solchen Anlagen weist das Gestell üblicherweise mehrere übereinander angeordnete Ebenen auf, die jeweils zumindest einen Transportgang und mehrere Lagerkanäle aufweisen können. Mittels eines auf den Schienen eines Transportgangs laufenden Transportwagens kann ein Transportgut aus dem Lagerkanal entnommen oder darin eingelagert werden. Der Transportwagen kann dazu beispielsweise einen ausgehend vom Transportwagen in den Lagerkanal hinein verfahrbaren Hubwagen aufweisen, der zum Anheben und Absenken des Transportguts ausgebildet ist (vgl. DE 20 2017 004 863 D1). EP 3 613 680 A1 offenbart ein automatisches Lager- und Bereitstellungssystem gemäß dem Oberbegriff des Anspruchs 1.

Nach dem Aufladen des Transportgutes auf den Transportwagen kann das Transportgut anschließend entlang des Transportgangs zu einer Entnahmestelle gebracht werden. Die Entnahmestelle kann beispielsweise für einen Gabelstapler zugänglich sein oder auch einen Aufzug aufweisen, über den das Transportgut zu einer unteren Ebene bewegt werden kann, von der aus das Transportgut aus dem Gestell entnommen werden kann.

Die Anzahl der Ebenen des Gestells ist durch die Lagerhallenhöhe begrenzt, in der sich die Anlage befindet. Bei vorgegebener Lagerhallenhöhe kann das Problem auftreten, dass zwischen einer oberen Gestellebene und der Lagerhallendecke eine gewisse Resthöhe verbleibt, welche nicht ausreicht, um eine weitere Ebene in Benutzung zu nehmen. In einem solchen Fall bleibt die Resthöhe der Lagerhalle ungenutzt, wodurch die Gesamtkapazität und damit die Wirtschaftlichkeit der Lagerhalle reduziert werden. Dies ist insbesondere dann ärgerlich, wenn die Resthöhe nur geringfügig kleiner ist als die Höhe einer zusätzlichen Ebene des Gestells. Die Lagerhallenhöhe kann darüber hinaus nicht beliebig hoch geplant und gebaut werden, da aufgrund von Brandschutzbestimmungen zumindest bei der Verwendung von Deckensprinkleranlagen eine maximale Deckenhöhe nicht überschritten werden darf.

Vor diesem Hintergrund ist es die Aufgabe der vorliegenden Erfindung, eine Anlage zum Fördern und Lagern von Transportgütern bereitzustellen, durch die eine vorgegebene Deckenhöhe besser ausgenutzt werden kann. Gelöst wird diese Aufgabe mit den Merkmalen des Anspruchs 1. Vorteilhafte Ausführungsformen sind in den Unteransprüchen angegeben.

Bei der erfindungsgemäßen Anlage weist zumindest eine der Schienen ein nach unten geöffnetes U-Profil auf oder ist daraus gebildet, wobei der Transportgang weiterhin zumindest eine in Querrichtung des Transportgangs verlaufende die Schienen miteinander verbindende Querverstrebung aufweist. Die Querverstrebung ist durch einen innen liegenden Schenkel des U-Profils hindurchgeführt und erstreckt sich weiter in Richtung eines und vorzugsweise bis zu einem außen liegenden Schenkel des U-Profils.

Zunächst werden einige im Rahmen der vorliegenden Beschreibung verwendete Begriffe erläutert. Bei dem Transportgut kann es sich insbesondere um eine Palette, beispielsweise eine Europoolpalette, handeln, auf der Waren oder mit Waren befüllte Transportbehälter abgestellt sind.

Ein U-Profil bezeichnet im Rahmen der Erfindung ein sich entlang einer Längsrichtung erstreckendes Profil, dessen Querschnitt U-förmig ausgebildet ist, also zwei Schenkel aufweist, die durch einen Steg miteinander verbunden sind. Es ist möglich, aber nicht zwangsläufig erforderlich, dass die Schenkel parallel zueinander verlaufen und/oder der Steg senkrecht zu den Schenkeln steht. Wenn das U-Profil nach unten geöffnet ist, bedeutet dies, dass der Steg nach oben und die Schenkel nach unten weisen. Der Steg kann auf diese Weise eine Lauffläche für den Transportwagen bilden. Der Transportwagen kann insbesondere Laufräder zum Abrollen auf den Schienen aufweisen. Die durch die Oberseite des Stegs gebildete Lauffläche kann eben sein oder auch eine andere an die Laufräder des Transportwagens angepasst Form haben.

Ein innen liegender Schenkel des U-Profils ist derjenige Schenkel des U-Profils, der zur gegenüberliegenden Schiene ausgerichtet ist.

Im Rahmen der Erfindung wurde erkannt, dass mittels der nach unten geöffneten U-Profile eine platzsparende und gleichzeitig sehr stabile Schienenkonstruktion realisiert werden kann. Insbesondere wird das U-Profil aufgrund der durch den Schenkel des U-Profils hindurchgeführten Querverstrebung versteift und stabilisiert. Die Querverstrebung kann zudem mit dem außen liegenden Schenkel des U-Profils und/oder mit dem innen liegenden Schenkel des U-Profils mittels einer Fügeverbindung verbunden sein, wodurch die Stabilität weiter erhöht wird. Gleichzeitig kann innerhalb des U-Profils und unterhalb der Querverstrebung ein Freiraum geschaffen werden, der für Anbauteile genutzt werden kann, die bei aus dem Stand der Technik bekannten Schienenkonstruktionen zusätzlichen Bauraum unterhalb der Schienen einnehmen würden.

Insbesondere war es im Stand der Technik üblich, die Schienen durch C-Profile zu realisieren, welche nach innen (also zur gegenüberliegenden Schiene hin) geöffnet sind. Die oberen Stege der C-Profile dienten in diesem Fall als Lauffläche für die Rollen des Transportwagens. Zusätzliche Anbauteile wurden unterhalb der unteren Stege des C-Profils befestigt und beanspruchten auf diese Weise zusätzlichen Bauraum.

Da der Lagerraum einer Ebene üblicherweise unmittelbar unterhalb der Schienen der darüber liegenden Ebene beginnt, verringert sich im Stand der Technik durch die Anbauteile die maximale Lagerhöhe, die in der unteren Ebene gelagert werden kann. Durch die erfindungsgemäßen nach unten geöffneten U-Profile kann durch die Verlegung der Anbauteile in den Freiraum des U-Profils in jeder Ebene eine gewisse Bauhöhe eingespart werden. Dies kann im Einzelfall dazu führen, dass zusätzlicher Raum geschaffen wird, der es erlaubt, in einer Lagerhalle eine zusätzliche Ebene in Benutzung zu nehmen. Die Lagerkapazität kann auf diese Weise beispielsweise um 25% erhöht werden, wenn anstelle von vier Ebenen fünf Ebenen realisiert werden können.

Bei den Anbauteilen kann es sich beispielsweise um sich entlang der Schienen erstreckende Beleuchtungseinrichtungen oder auch um Befestigungsschienen für Werkzeug oder Schutzausrüstung handeln. Solche Beleuchtungseinrichtungen oder Befestigungsschienen sind üblicherweise für manuelle Wartungsvorgänge im Bereich der Transportgassen erforderlich. Um manuelle Wartungsvorgänge zu ermöglichen, war es im Stand der Technik grundsätzlich bekannt, den Transportgang im Bereich zwischen den Schienen mit einer Lauffläche, beispielsweise bestehend aus Gitterrostelementen auszustatten, die es einem Benutzer gestatten, im Falle von Störungen den Ort der Störung zu Fuß über den jeweiligen Transportgang zu erreichen und die Störung manuell zu beheben. Durch die Beleuchtung kann ein sicheres Arbeiten gewährleistet werden, zudem ist es bei Wartungsvorgängen regelmäßig erforderlich, dass der Benutzer seine Schutzausrüstung sowie Werkzeuge sicher lagern kann.

In einer bevorzugten Ausführungsform ist die Querverstrebung durch eine im innen liegenden Schenkel des U-Profils befindliche Durchgangsöffnung durchgeführt, wobei die Durchgangsöffnung ausgehend von einer Unterseite des U-Profils auf einer Höhe angeordnet ist, die zwischen 5% und 80% einer Schenkellänge des U-Profils, vorzugsweise zwischen 10% und 60%, weiter vorzugsweise zwischen 20% und 40% der Schenkellänge beträgt. Die Unterseite des U-Profils wird dabei durch das untere Ende des innen liegenden Schenkels gebildet. Es hat sich gezeigt, dass die Wahl der Durchgangsöffnung in der vorstehend genannten Höhe des Schenkels einerseits zu einer guten Versteifung des U-Profils führt und andererseits genügend Freiraum für unterhalb der Querverstrebung angeordnete Anbauteile verbleibt.

In einer Ausführungsform weist das U-Profil eine entlang der Querrichtung des Transportgangs gemessene Breite auf, die zwischen 20 mm und 100 mm, vorzugsweise zwischen 40 mm und 80 mm, weiter vorzugsweise zwischen 50 mm und 70 mm liegt. Das U-Profil kann zudem eine Stärke aufweisen, die zwischen 2 mm und 10 mm, vorzugsweise zwischen 3 mm und 8 mm, weiter vorzugsweise zwischen 4 mm und 6 m liegt. Eine Gesamthöhe des U-Profils kann zwischen 80 mm und 200 mm, vorzugsweise zwischen 100 mm und 160 mm, weiter vorzugsweise zwischen 120 mm und 140 mm liegen. Durch die Wahl der vorstehend genannten Dimensionen kann auf wirtschaftliche Weise eine hohe Stabilität erzielt werden.

In einer Ausführungsform ist innerhalb des U-Profils und unterhalb der Querverstrebung ein Freiraum vorhanden, in dem eine sich vorzugsweise in Längsrichtung erstreckende Beleuchtungsvorrichtung zur Beleuchtung einer unterhalb des Transportgangs befindlichen Gestellebene angeordnet ist. Bei der Beleuchtungsvorrichtung kann es sich um eine Lichtleiste handeln. Dadurch ist im Falle notwendiger Wartungsarbeiten im Bereich einer unterhalb des U-Profils befindlichen Gestellebene eine ausreichende Beleuchtung sichergestellt.

Weiterhin kann innerhalb des U-Profils und unterhalb der Querverstrebung ein Freiraum vorhanden sein, in dem eine sich in Längsrichtung erstreckende Befestigungsvorrichtung zum Einhängen von Schutzausrüstung und/oder Werkzeug angeordnet ist. Bei der Befestigungsvorrichtung kann es sich beispielsweise um eine nach unten geöffnete C-Profilhalteschiene oder auch um ein Drahtseil handeln.

In einer vorteilhaften Ausführungsform ist die Querverstrebung mit dem innen liegenden Schenkel des U-Profils durch eine Fügeverbindung verbunden. Dies kann beispielsweise erreicht werden, indem im innen liegenden Schenkel des U-Profils zunächst ein zur Querverstrebung korrespondierendes Durchgangsloch erzeugt wird, wobei nach dem Durchführen der Querverstrebung durch das Durchgangsloch die Umfangsfläche des Durchgangslochs mit der Querverstrebung zusammengefügt, insbesondere verschweißt wird. Die Stabilität kann durch diese Maßnahme weiter verbessert werden.

In einer Ausführungsform weist der Transportgang eine Mehrzahl von in Längsrichtung voneinander beabstandeten die Schienen miteinander verbindenden Querverstrebungen auf. Weiterhin kann vorgesehen sein, dass jeweils zwei benachbarte Querverstrebungen ein Laufflächenelement tragen. Insbesondere kann das Laufflächenelement auf die Querverstrebungen aufgelegt sein. Bei den Laufflächenelementen kann es sich insbesondere um Gitterroste handeln. Durch die Laufflächenelemente kann eine durchgängige entlang des Transportgangs führende Lauffläche erzeugt werden, durch die der Transportgang im Falle von Störungen leicht für einen Benutzer zugänglich ist.

Die Querverstrebung ist in einer bevorzugten Ausführungsform durch ein Hutprofil gebildet, das einen nach oben weisenden Deckel, zwei vom Deckel nach unten abragende Seitenwände und zwei in Längsrichtung des Transportgangs von den Seitenwänden abragende Auflageflächen aufweist. Bevorzugt steht der Deckel in Querrichtung des Transportgangs über die Seitenwände und die Auflageflächen hinaus. Weiter bevorzugt ist der überstehende Teil des Deckels durch den innen liegenden Schenkel des U-Profils hindurchgeführt und mit einem außen liegenden Schenkel des U-Profils mittels einer Fügeverbindung verbunden ist. Das Hutprofil ist somit vorzugsweise nicht vollständig durch den Schenkel des U-Profils hindurchgeführt. Vielmehr ist bevorzugt lediglich der Deckel des Hutprofils durch den Schenkel durchgeführt. Die Seitenwände und die Auflageflächen des Hutprofils können an dem innen liegenden Schenkels des U-Profils anliegen oder alternativ mit diesem durch eine Fügeverbindung verbunden sein. Das Hutprofil kann eine Breite aufweisen, die zwischen 80 mm und 300 mm, vorzugsweise zwischen 120 und 200 mm, weiter vorzugsweise zwischen 140 mm und 160 mm liegt. Eine Höhe des Hutprofils kann zwischen 15 mm und 60 mm, vorzugsweise zwischen 20 mm und 50 mm, weiter vorzugsweise zwischen 30 mm und 40 mm liegen. Eine Breite des Deckels kann zwischen 40 mm und 160 mm, vorzugsweise zwischen 60 mm und 100 mm, weiter vorzugsweise zwischen 75 und 95 mm liegen.

Bei der vorstehend beschriebenen Ausführungsform kann eine Mehrzahl von in Längsrichtung voneinander beabstandeten die Schienen miteinander verbindenden Hutprofilen vorgesehen sein, wobei vorzugsweise jeweils zwei benachbarte Hutprofile ein Laufflächenelement tragen, wobei die Laufflächenelemente weiter vorzugsweise auf den Auflageflächen benachbarter Hutprofile aufliegen. Da die Auflageflächen bei dem Hutprofil durch die Seitenwände vom Deckel des Hutprofils beabstandet sind, liegt die Auflagefläche für die Laufflächenelemente tiefer als der Deckel. Dadurch können Laufflächenelemente tiefer gelagert werden, so dass der Raum oberhalb der Laufflächenelemente für den Transportwagen genutzt werden kann. Ein in Längsrichtung des Transportgangs gemessener Abstand zwischen den Querverstrebungen kann zwischen 20 und 100 cm, vorzugsweise zwischen 25 und 75 cm weiter vorzugsweise zwischen 30 und 50 cm liegen.

In einer Ausführungsform kann die Querverstrebung in eine Durchgangsöffnung im außen liegenden Schenkel des U-Profils eingeführt sein, wobei die Fügeverbindung zwischen einer Umfangsfläche der Durchgangsöffnung und der Querverstrebung hergestellt ist. Die Festigkeit der Fügeverbindung kann dadurch erhöht werden, da die Querverstrebung vollumfänglich mit dem Material des Schenkels des U-Profils zusammengefügt werden kann.

Nachfolgend wird eine vorteilhafte Ausführungsform der Erfindung unter Bezugnahme auf die beigefügten Zeichnungen beispielhaft erläutert. Es zeigen:
- Figur 1:: eine dreidimensionale Seitenansicht einer erfindungsgemäßen Anlage;
- Figur 2:: eine Querschnittsansicht der erfindungsgemäßen Anlage der Figur 1;
- Figur 3:: ein vergrößerter Ausschnitt aus der Figur 2;
- Figur 4:: ein vergrößerter Ausschnitt aus der Figur 1;
- Figur 5:: eine dreidimensionale Frontansicht auf einen Schienenabschnitt der in Figur 1 gezeigten Anlage;
- Figur 6:: eine dreidimensionale Ansicht eines Transportgangabschnitts der in Figur 1 gezeigten Anlage;
- Figur 7:: eine Draufsicht auf den Transportgangabschnitt der Figur 6;
- Figur 8:: eine Schnittansicht entlang der in Figur 7 gezeigten Linie A-A;
- Figur 9:: eine Schnittansicht entlang der in Figur 7 gezeigten Linie B-B;
- Figur 10:: eine vergrößerte Ansicht des in Figur 8 gezeigten Ausschnitts B;
- Figur 11:: eine vergrößerte Ansicht des in Figur 9 gezeigten Ausschnitts C;
- Figur 12:: eine vergrößerte Ansicht des in Figur 7 gezeigten Ausschnitts D.

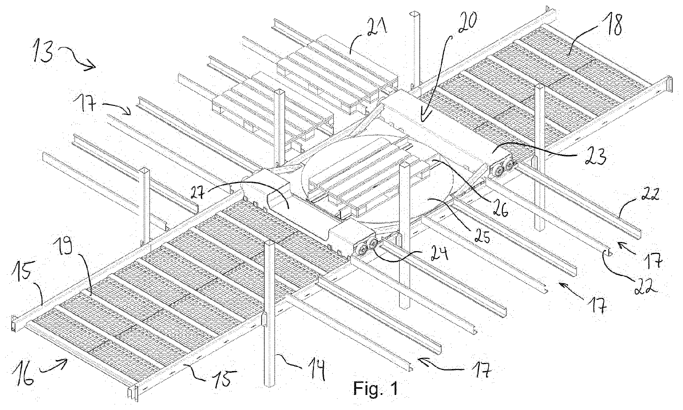

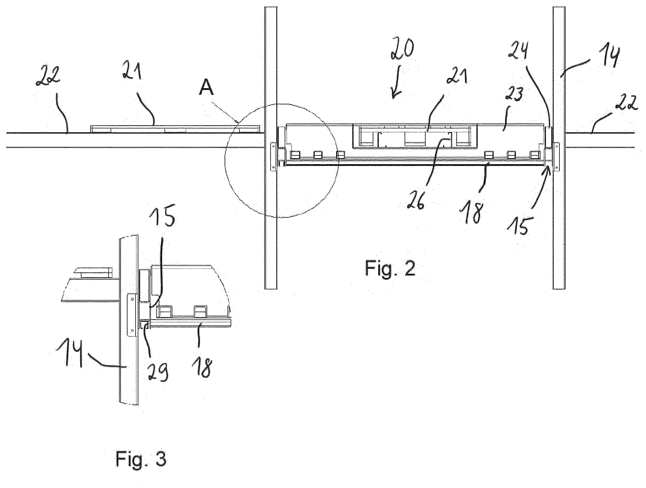

Figur 1 zeigt eine dreidimensionale Seitenansicht einer erfindungsgemäßen Anlage zum Fördern und Lagern von Paletten. Die Figur 2 zeigt die Anlage der Figur 1 in einer Querschnittsansicht. Figur 3 zeigt den mit dem Buchstaben A gekennzeichneten Ausschnitt aus der Figur 2 in einer vergrößerten Ansicht. Die Anlage umfasst ein Gestell 13 mit einem Transportgang 16 und mehreren senkrecht in den Transportgang 16 einmündenden Lagerkanälen 17. Der Transportgang 16 weist zwei parallel verlaufende Schienen 15 auf, die sich entlang der Längsrichtung des Transportgangs 16 erstrecken. Die Schienen 15 sind durch eine Mehrzahl von Querverstrebungen 19 miteinander verbunden. Die Querverstrebungen 19 sind senkrecht zu den Schienen 15 ausgerichtet (verlaufen also in Querrichtung des Transportgangs). Auf jeweils zwei benachbarte Querverstrebungen 19 ist jeweils ein Gitterrost 18 aufgelegt, so dass durch die Mehrzahl von Gitterrosten 18 eine durchgängige Lauffläche entsteht.

Jeder der Lagerkanäle 17 weist jeweils zwei Schienen 22 auf, die gegenüber den Schienen 15 des Transportgangs leicht nach oben versetzt sind (siehe Figur 2). Zur Lagerung der Paletten 21 in einem Lagerkanal 17 werden diese auf den Schienen 22 abgestellt. Auf den Paletten 21 können beispielsweise mit Waren gefüllte Behälter angeordnet sein, auf deren Darstellung in den vorliegenden Figuren aus Gründen der Übersichtlichkeit verzichtet wird.

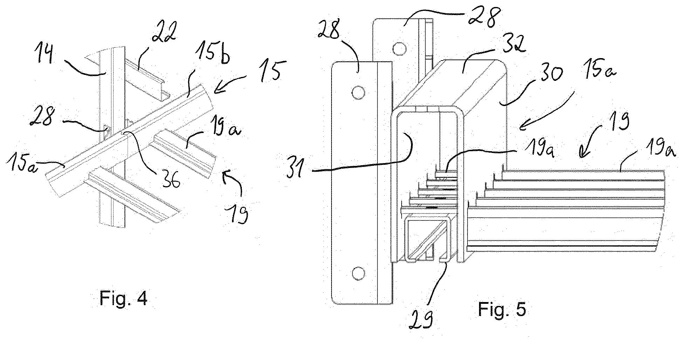

Das Gestell 13 umfasst zudem eine Mehrzahl von vertikal ausgerichteten Ständerprofilen 14, die mit den Schienen 15 verbunden sind (siehe auch Figur 4). Der Transportgang 16 und die Lagerkanäle 17 bilden eine Ebene des Gestells 13. Oberhalb und unterhalb dieser Ebene befinden sich weitere Ebenen, die jeweils einen weiteren Transportgang und weitere Lagerkanäle aufweisen und die aus Gründen der Übersichtlichkeit ebenfalls nicht gezeigt sind.

Auf den Schienen 15 befindet sich ein entlang der Transportgangs 16 bewegbarer Transportwagen 20, dessen Laufräder 24 auf Laufflächen der Schienen 15 abgestellt sind. Der Transportwagen 20 dient zum Fördern der Paletten 21 entlang des Transportgangs 16 und weist dazu mehrere im Bereich 23 angeordnete Antriebe zum Antreiben der Laufräder 24 auf. Zudem dient der Transportwagen zum Einlagern bzw. Entnehmen der Paletten in die bzw. aus den Lagerkanälen 17. Dazu umfasst der Transportwagen 20 einen Drehteller 25, auf dem zwei Schienenelemente 26 angeordnet sind, auf denen in den Figuren 1 und 2 eine Palette 21 abgestellt ist. Mittels eines auf dem Drehteller 25 unterhalb der Palette 21 positionierbaren Hubwagens, der in den Figuren aus Gründen der Übersichtlichkeit nicht dargestellt ist, kann die Palette angehoben bzw. abgesenkt werden.

Um die auf den Schienenelementen 26 abgestellte Palette 21 in einen Lagerkanal 17 einzulagern kann der Drehteller 25 um 90° rotiert werden, so dass die Schienenelemente 26 in Verlängerung der (bzw. fluchtend mit den) Schienen 22 des entsprechenden Lagerkanals 17 ausgerichtet werden. Der Hubwagen kann dann nach dem Anheben der Palette 21 zusammen mit dieser in den Lagerkanal 17 eingefahren werden, um die Palette dort abzustellen. Ein Entnahmevorgang funktioniert entsprechend in umgekehrter Weise.

Eine auf dem Transportwagen 20 befindliche Palette 21 kann zudem vom Hubwagen aus entlang der Längsrichtung des Transportkanals 16 an eine Entnahmestelle (in Figur 1 nicht gezeigt) übergeben werden, indem der Hubwagen zusammen mit der aufgeladenen Palette 21 in Längsrichtung des Transportkanals durch eine zwischen den Antrieben 23 befindliche Aussparung 27 hindurch bewegt wird.

Die Figur 4 zeigt eine vergrößerte dreidimensionale Ansicht im Bereich der Verbindung zwischen der Schiene 15 und einem Ständerprofil 14. In dieser Ansicht ist erkennbar, dass die Querverstrebungen 19 durch Hutprofile gebildet sind. Zudem ist erkennbar, dass die Schienen 15 aus aneinandergesetzten Schienenabschnitten 15a, 15b bestehen, die endseitig mittels Flanschverbindungen 28 an den Ständerprofilen 14 fixiert sind.

Die Flanschverbindungen 28 sind mittels einer Schweißverbindung an einem außen liegenden Schenkel des U-Profils befestigt (siehe auch Figur 5) und mit dem Ständerprofil 14 verschraubt. Die Länge eines Schienenabschnitts beträgt vorliegend 2,2 m. Die Schienenabschnitte werden mit einer Längentoleranz von weniger als 10⁻⁴ gefertigt. Auch die Positionierung der Flanschverbindungen 28 an den Schienenabschnitten 15a, 15b erfolgt mit einer entsprechenden Genauigkeit. Auf diese Weise ist sichergestellt, dass benachbarte Schienenabschnitte 15a, 15b im montierten Zustand passgenau aneinander liegen und so ein ruhiges Ablaufen des Transportwagens 20 ermöglichen.

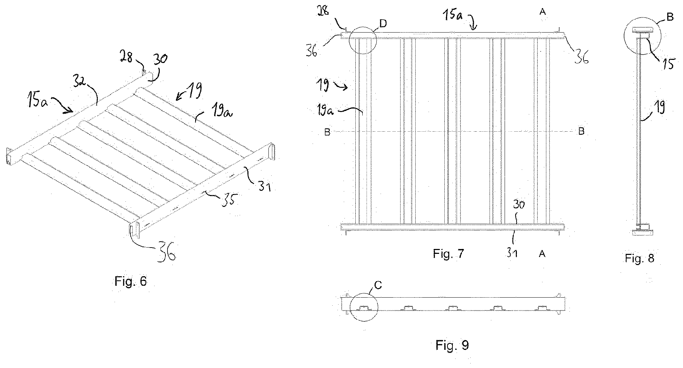

Die Schienenabschnitte 15a, 15b weisen zudem im Bereich der durch die Oberseite des U-Profils gebildeten Lauffläche eine Stoßkante 36 auf, an der benachbarte Schienenabschnitte aneinander liegen (siehe auch Figuren 6 und 7). Die Stoßkante 36 schließt mit der Querrichtung des Transportgangs einen Winkel ein. Insbesondere weist der Schienenabschnitt 15b im Bereich der Lauffläche einen dreieckigen Vorsprung auf, der in eine korrespondierende Aussparung des Schienenabschnitts 15a eingreift. Der Winkel zwischen einem Schenkel des Dreiecks und der Querrichtung beträgt vorliegend etwa 50°, wobei ein bevorzugter Winkelbereich zwischen 20° und 80° liegen kann. Durch die gewinkelte Stoßkante 36 kann die Laufruhe der Rollen des Transportwagens beim Übergang zwischen zwei Schienenabschnitten 15a, 15b weiter verbessert werden.

Durch die vorstehend beschriebene Befestigung der Schienenabschnitte 15a, 15b an den Ständerprofilen 14 kann eine Mehrzahl von in mehreren Ebenen übereinander angeordneten Transportkanälen 16 gebildet werden, die ein statisch unabhängiges Transportkanal-Teilregal bilden. Insbesondere kann vorgesehen sein, dass die Lagerkanäle 17 ein von dem Transportkanal-Teilregal statisch unabhängiges zweites Lagerkanal-Teilregal bilden, das insbesondere eigene Ständerprofile aufweisen kann (nicht gezeigt). Durch die statisch unabhängige Ausbildung der beiden Teilregale kann vermieden werden, dass Zuglasten von den Transportgängen auf die Lagerkanäle ausgeübt werden.

Figur 5 zeigt einen Teil der Anlage der Figur 1 in einer vergrößerten dreidimensionalen Frontansicht. In dieser Ansicht ist erkennbar, dass die Schiene 15 bzw. der Schienenabschnitt 15a aus einem nach unten geöffneten U-Profil gebildet ist. Das U-Profil umfasst einen innen liegenden Schenkel 30, einen au-ßen liegenden Schenkel 31 und einen am oberen Ende des U-Profils befindlichen die Schenkel 30, 31 miteinander verbindenden Steg 32.

Weiterhin ist erkennbar, dass die Hutprofile 19 jeweils einen Deckel 19a aufweisen, der durch den innen liegenden Schenkel 30 hindurchgeführt ist. Ein dazu im Schenkel 30 vorhandenes Durchgangsloch ist entsprechend der Form des Deckels 19a schlitzförmig ausgestaltet. Nach dem Hindurchführen wurde der Deckel 19a an dem innen liegenden Schenkel 30 mittels einer Schweißverbindung fixiert. Der Deckel 19a ist außerdem in eine Öffnung im außen liegenden Schenkel 31 eingeführt und ebenfalls mit dem außen liegenden Schenkel 31 verschweißt (siehe auch Figur 6).

Innerhalb des U-Profils und unterhalb des Deckels 19a ist eine Befestigungsschiene 29 angeordnet, die durch ein nach unten geöffnetes C-Profil gebildet ist. In die Befestigungsschiene 29 kann mittels eines passenden Adapters beispielsweise Schutzausrüstung und Werkzeug eines Benutzers eingehängt werden, der in einer Ebene unterhalb der gezeigten Ebene Wartungsarbeiten ausführt. Alternativ kann unterhalb des Deckels 19a auch eine Beleuchtungsleiste angeordnet werden (nicht gezeigt), die zur Beleuchtung des Transportgangs der unteren Ebene dient. In einer bevorzugten Ausführungsform ist die Befestigungsschiene 29 in einer der beiden parallel verlaufenden Schienen 15 und die Beleuchtungsleiste in der anderen der beiden Schienen 15 untergebracht.

Die Figuren 6 bis 9 zeigen verschiedene Ansichten eines Teilstücks des Transportgangs 16 der erfindungsgemäßen Anlage. Die Figur 6 zeigt das Teilstück des Transportgangs 16 in einer dreidimensionalen Schrägansicht. Die Figur 7 zeigt eine Draufsicht auf das Teilstück des Transportgangs 16. Die Figur 8 zeigt eine Schnittansicht entlang der in Figur 7 gezeigten Linie A-A. Figur 9 zeigt eine Schnittansicht entlang der in Figur 7 gezeigten Linie B-B.

Das Teilstück des Transportgangs 16 umfasst zwei parallel zueinander ausgerichtete Schienenabschnitte 15a und fünf die Schienenabschnitte 15a verbindende Hutprofile 19. Die Hutprofile 19 sind in einem Abstand entlang der Längsrichtung des Transportgangs von etwa 440 mm zueinander angeordnet und stehen senkrecht zu den Schienenabschnitten 15a. Die Hutprofile weisen eine Breite (gemessen entlang der Längsrichtung des Transportgangs) von 152 mm und eine Höhe von 35 mm auf. Der Deckel 19a der Hutprofile ist jeweils etwa 84 mm breit. Die Hutprofile sind aus einem Blech mit einer Stärke von 4 mm durch Kanten hergestellt.

Der Steg 32 des U-Profils weist eine Länge von etwa 60 mm auf. Diese Länge entspricht in etwa der Breite des U-Profils (gemessen in Querrichtung des Transportgangs). Die Länge der Schenkel 30, 31 des U-Profils (welche der Höhe des U-Profils entspricht) beträgt 130 mm. Vom unteren Ende des U-Profils (also vom unteren Ende der Schenkel) ausgehend ist der Deckel 19a des Hutprofils auf einer Höhe von etwa 42 mm durch den inneren Schenkel 30 hindurchgeführt. Das U-Profil ist aus einem Blech der Stärke 5 mm durch Kanten hergestellt.

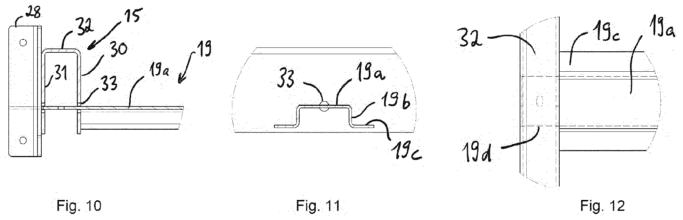

Die in den Figuren 7 bis 9 durch einen Kreis markierten Ausschnitte B, C und D sind in den Figuren 10 (Ausschnitt B), 11 (Ausschnitt C) und 12 (Ausschnitt D) in vergrößerter Ansicht gezeigt. In den Figuren 10 und 11 ist erkennbar, dass die im innen liegenden Schenkel 30 angeordnete Durchgangsöffnung für den Deckel des Hutprofils 19a eine kreisförmige Erweiterung aufweist, welche dazu dient, den Deckel 19a des Hutprofils beim Zusammenbau besser einfädeln zu können.

Darüber hinaus zeigt die vergrößerte Ansicht der Figur 11, dass das Hutprofil 19 zwei vom Deckel 19a aus nach unten weisende Seitenwände 19b und zwei am unteren Ende der Seitenwände 19b in Längsrichtung des Transportgangs abragende Auflageflächen 19c aufweist. Auf die Auflageflächen 19c können die Gitterroste 18 (siehe Figur 1), welche in den Figuren 2 bis 12 der Übersicht halber nicht illustriert sind, aufgelegt werden.

Schließlich ist in der Draufsicht der Figur 12 mittels einer gestrichelten Linie 19d illustriert, dass der Deckel 19a des Hutprofils 19 über seine gesamte Breite durch den Schenkel 30 des U-Profils hindurchgeführt ist. Die Seitenwände 19b sowie die Auflageflächen 19c liegen hingegen an der Wand des inneren Schenkels 30 an. Der Deckel 19a steht also in Querrichtung des Transportgangs über die Seitenwände 19b und die Auflageflächen 19c hinaus, wobei die Erstreckung dieses überstehenden Teils des Deckels 19a in etwa der Breite des U-Profils entspricht.

## Patentansprüche

1. Anlage zum Fördern und Lagern von Transportgütern (21), umfassend:
- ein Gestell (13), das zumindest einen Transportgang (16) und mehrere in den Transportgang (16) einmündende Lagerkanäle (17) aufweist, in die ein Transportgut (21) oder mehrere Transportgüter (21) hintereinander einlagerbar sind, und
- einen Transportwagen (20), der in Längsrichtung des Transportgangs (16) bewegbar ist und der dazu ausgebildet ist, die Transportgüter (21) entlang des Transportgangs (16) zu bewegen und in die Lagerkanäle (17) einzulagern oder aus den Lagerkanälen (17) auszulagern,
wobei der Transportgang (16) zwei in Längsrichtung des Transportgangs verlaufende Schienen (15) für den Transportwagen (20) aufweist, wobei der Transportgang (16) weiterhin zumindest eine in Querrichtung des Transportgangs (16) verlaufende die Schienen (15) miteinander verbindende Querverstrebung (19) aufweist, **dadurch gekennzeichnet, dass** zumindest eine der Schienen (15) ein nach unten geöffnetes U-Profil aufweist, wobei die Querverstrebung (19) durch einen innen liegenden Schenkel (30) des U-Profils hindurchgeführt ist und sich weiter bis zu einem außen liegenden Schenkel (31) des U-Profils erstreckt.

2. Anlage gemäß Anspruch 1, bei der die Querverstrebung (19) mit dem außen liegenden Schenkel (31) des U-Profils mittels einer Fügeverbindung verbunden ist.

3. Anlage gemäß Anspruch 1 oder 2, bei der die Querverstrebung (19) durch eine im innen liegenden Schenkel (30) des U-Profils befindliche Durchgangsöffnung durchgeführt ist, wobei die Durchgangsöffnung ausgehend von einer Unterseite des U-Profils auf einer Höhe angeordnet ist, die zwischen 5% und 80% einer Schenkellänge des U-Profils, vorzugsweise zwischen 10% und 60%, weiter vorzugsweise zwischen 20% und 40% der Schenkellänge beträgt.

4. Anlage gemäß einem der Ansprüche 1 bis 3, bei der das U-Profil zumindest eines der folgenden Merkmale aufweist:
- eine entlang der Querrichtung gemessene Breite, die zwischen 20 mm und 100 mm, vorzugsweise zwischen 40 mm und 80 mm, weiter vorzugsweise zwischen 50 mm und 70 mm liegt;
- eine Stärke zwischen 2 mm und 10 mm, vorzugsweise zwischen 3 mm und 8 mm, weiter vorzugsweise zwischen 4 mm und 6 m;
- eine Gesamthöhe zwischen 80 mm und 200 mm, vorzugsweise zwischen 100 mm und 160 mm, weiter vorzugsweise zwischen 120 mm und 140 mm.

5. Anlage gemäß einem der Ansprüche 1 bis 4, bei der innerhalb des U-Profils und unterhalb der Querverstrebung (19) ein Freiraum vorhanden ist, in dem eine sich vorzugsweise in Längsrichtung erstreckende Beleuchtungsvorrichtung zur Beleuchtung einer unterhalb des Transportgangs (16) befindlichen Gestellebene angeordnet ist.

6. Anlage gemäß einem der Ansprüche 1 bis 5, bei der innerhalb des U-Profils unterhalb der Querverstrebung (19) ein Freiraum vorhanden ist, in dem eine sich in Längsrichtung erstreckende Befestigungsvorrichtung (29) zum Einhängen von Schutzausrüstung und/oder Werkzeug angeordnet ist.

7. Anlage gemäß einem der Ansprüche 1 bis 6, bei der die Querverstrebung (19) mit dem innen liegenden Schenkel (30) des U-Profils durch eine Fügeverbindung verbunden ist.

8. Anlage gemäß einem der Ansprüche 1 bis 7, bei der der Transportgang (16) eine Mehrzahl von in Längsrichtung voneinander beabstandeten die Schienen (15) miteinander verbindenden Querverstrebungen (19) aufweist, wobei vorzugsweise jeweils zwei benachbarte Querverstrebungen (19) ein Laufflächenelement (18) tragen.

9. Anlage gemäß einem der Ansprüche 1 bis 8, bei der die Querverstrebung (19) durch ein Hutprofil gebildet ist, das einen Deckel (19a), zwei vom Deckel nach unten abragende Seitenwände (19b) und zwei in Längsrichtung des Transportgangs von den Seitenwänden (19b) abragende Auflageflächen (19c) aufweist, wobei der Deckel (19a) in Querrichtung des Transportgangs (16) über die Seitenwände (19b) und die Auflageflächen (19c) hinausragt und durch den innen liegenden Schenkel (30) des U-Profils hindurchgeführt und mit einem außen liegenden Schenkel (31) des U-Profils mittels einer Fügeverbindung verbunden ist.

10. Anlage gemäß Anspruch 9, bei dem das Hutprofil zumindest eines der weiteren Merkmale aufweist:
- eine Breite des Hutprofils liegt zwischen 80 mm und 300 mm, vorzugsweise zwischen 120 und 200 mm, weiter vorzugsweise zwischen 140 mm und 160 mm;
- eine Höhe des Hutprofils liegt zwischen 15 mm und 60 mm, vorzugsweise zwischen 20 mm und 50 mm, weiter vorzugsweise zwischen 30 mm und 40 mm;
- eine Breite des Deckels liegt zwischen 40 mm und 160 mm, vorzugsweise zwischen 60 mm und 100 mm, weiter vorzugsweise zwischen 75 und 95 mm.

11. Anlage gemäß Anspruch einem der Ansprüche 9 oder 10, bei der der Transportgang (16) eine Mehrzahl von in Längsrichtung voneinander beabstandeten die Schienen (15) miteinander verbindenden Hutprofilen (19) aufweist, wobei vorzugsweise jeweils zwei benachbarte Hutprofile (19) ein Laufflächenelement (18) tragen, wobei die Laufflächenelemente (18) weiter vorzugsweise auf den Auflageflächen (19c) benachbarter Hutprofile (19) aufliegen.

12. Anlage gemäß einem der Ansprüche 1 bis 11, bei der ein in Längsrichtung gemessener Abstand zwischen den Querverstrebungen (19) zwischen 20 und 100 cm, vorzugsweise zwischen 25 und 75 cm weiter vorzugsweise zwischen 30 und 50 cm liegt.

13. Anlage gemäß einem der Ansprüche 1 bis 12, bei der die Querverstrebung (19) in eine Durchgangsöffnung (35) im au-ßen liegenden Schenkel (31) des U-Profils eingeführt ist, wobei die Fügeverbindung zwischen einer Umfangsfläche der Durchgangsöffnung (35) und der Querverstrebung (19) hergestellt ist.

14. Anlage gemäß einem der Ansprüche 1 bis 13, bei der eine Schiene (15) aus einer Mehrzahl von in Längsrichtung aneinander gereihten Schienenabschnitten (15a, 15b) gebildet ist, wobei die Anlage vorzugsweise eine Mehrzahl von Ständerprofilen (14) aufweist und ein Schienenabschnitt (15a, 15b) mittels zweier Flanschverbindungen (28) mit zwei benachbarten Ständerprofilen (14) verbunden ist.

15. Anlage gemäß Anspruch 14, bei der benachbarte Schienenabschnitte (15a, 15b) im Bereich einer Lauffläche der Schiene (15) eine Stoßkante (36) aufweisen, an der benachbarte Schienenabschnitte (15a, 15b) aneinander anliegen, wobei die Stoßkante (36) mit der Querrichtung des Transportgangs einen Winkel einschließt, welcher zwischen 20° und 80°, vorzugsweise zwischen 30° und 70° liegt, wobei die Stoßkante (36) weiter vorzugsweise durch einen Vorsprung eines Schienenabschnitts (15b) gebildet wird, der in eine korrespondierende Aussparung des anderen Schienenabschnitts (15a) eingreift.

## Claims

1. Installation for conveying and storing items (21) to be transported, comprising:
- a frame (13) which has at least one transport aisle (16) and a plurality of storage channels (17) which open into the transport aisle (16) and into which an item (21) to be transported or a plurality of items (21) to be transported can be placed into storage one behind another, and
- a transport car (20) which is movable in the longitudinal direction of the transport aisle (16) and which is designed to move the items (21) to be transported along the transport aisle (16) and to place them into storage in the storage channels (17) or remove them from storage in the storage channels (17),
wherein the transport aisle (16) has two rails (15), running in the longitudinal direction of the transport aisle, for the transport car (20), wherein the transport aisle (16) furthermore has at least one cross strut (19) which runs in the transverse direction of the transport aisle (16) and connects the rails (15) to each other, **characterized in that** at least one of the rails (15) has a downwardly open U profile, wherein the cross strut (19) is guided through an inner limb (30) of the U profile and extends further as far as an outer limb (31) of the U profile.

2. Installation according to Claim 1, in which the cross strut (19) is connected to the outer limb (31) of the U profile by means of a joint.

3. Installation according to Claim 1 or 2, in which the cross strut (19) is guided through a passage opening located in the inner limb (30) of the U profile, wherein the passage opening, starting from an underside of the U profile, is arranged at a height which is between 5% and 80% of a limb length of the U profile, preferably between 10% and 60%, more preferably between 20% and 40% of the limb length.

4. Installation according to one of Claims 1 to 3, in which the U profile has at least one of the following features:
- a width which is measured along the transverse direction and is between 20 mm and 100 mm, preferably between 40 mm and 80 mm, more preferably between 50 mm and 70 mm;
- a thickness between 2 mm and 10 mm, preferably between 3 mm and 8 mm, more preferably between 4 mm and 6 m;
- an overall height between 80 mm and 200 mm, preferably between 100 mm and 160 mm, more preferably between 120 mm and 140 mm.

5. Installation according to one of Claims 1 to 4, in which there is a clearance within the U profile and below the cross strut (19), in which an illumination device which preferably extends in the longitudinal direction is arranged, for illuminating a frame level located below the transport aisle (16).

6. Installation according to one of Claims 1 to 5, in which there is a clearance within the U profile below the cross strut (19), in which a fastening device (29) which extends in the longitudinal direction is arranged, for the suspension of protective equipment and/or tools.

7. Installation according to one of Claims 1 to 6, in which the cross strut (19) is connected to the inner limb (30) of the U profile by means of a joint.

8. Installation according to one of Claims 1 to 7, in which the transport aisle (16) has a plurality of cross struts (19) which are spaced apart from one another in the longitudinal direction and connect the rails (15) to each other, wherein preferably in each case two adjacent cross struts (19) carry a running surface element (18).

9. Installation according to one of Claims 1 to 8, in which the cross strut (19) is formed by a top hat profile which has a cover (19a), two side walls (19b) projecting downwards from the cover and two supporting surfaces (19c) projecting from the side walls (19b) in the longitudinal direction of the transport aisle, wherein the cover (19a) projects beyond the side walls (19b) and the supporting surfaces (19c) in the transverse direction of the transport aisle (16) and is guided through the inner limb (30) of the U profile and is connected to an outer limb (31) of the U profile by means of a joint.

10. Installation according to Claim 9, in which the top hat profile has at least one of the further features:
- a width of the top hat profile is between 80 mm and 300 mm, preferably between 120 and 200 mm, more preferably between 140 mm and 160 mm;
- a height of the top hat profile is between 15 mm and 60 mm, preferably between 20 mm and 50 mm, more preferably between 30 mm and 40 mm;
- a width of the cover is between 40 mm and 160 mm, preferably between 60 mm and 100 mm, more preferably between 75 and 95 mm.

11. Installation according to either of Claims 9 and 10, in which the transport aisle (16) has a plurality of top hat profiles (19) which are spaced apart from one another in the longitudinal direction and connect the rails (15) to each other, wherein preferably in each case two adjacent top hat profiles (19) carry a running surface element (18), wherein the running surface elements (18) more preferably rest on the supporting surfaces (19c) of adjacent top hat profiles (19).

12. Installation according to one of Claims 1 to 11, in which a distance, measured in the longitudinal direction, between the cross struts (19) is between 20 and 100 cm, preferably between 25 and 75 cm, more preferably between 30 and 50 cm.

13. Installation according to one of Claims 1 to 12, in which the cross strut (19) is introduced into a passage opening (35) in the outer limb (31) of the U profile, wherein the joint is produced between a peripheral surface of the passage opening (35) and the cross strut (19).

14. Installation according to one of Claims 1 to 13, in which a rail (15) is formed from a plurality of rail sections (15a, 15b) arranged in a row in the longitudinal direction, wherein the installation preferably has a plurality of stand profiles (14), and a rail section (15a, 15b) is connected to two adjacent stand profiles (14) by means of two flange connections (28).

15. Installation according to Claim 14, in which adjacent rail sections (15a, 15b) have, in the region of a running surface of the rail (15), an abutting edge (36) at which adjacent rail sections (15a, 15b) butt against each other, wherein the abutting edge (36) encloses an angle with the transverse direction of the transport aisle that is between 20° and 80°, preferably between 30° and 70°, wherein the abutting edge (36) is further preferably formed by a projection of one rail section (15b), which engages in a corresponding recess in the other rail section (15a).

## Revendications

1. Installation pour le transport et le stockage de produits à transporter (21), comprenant :
- un châssis (13), qui présente au moins un couloir de transport (16) et plusieurs canaux de stockage (17) débouchant dans le couloir de transport (16), dans lesquels un produit à transporter (21) ou plusieurs produits à transporter (21) peuvent être stockés les uns derrière les autres, et
- un chariot de transport (20) qui est mobile dans la direction longitudinale du couloir de transport (16) et qui est configuré pour déplacer les produits à transporter (21) le long du couloir de transport (16) et pour les stocker dans les canaux de stockage (17) ou les déstocker des canaux de stockage (17),
le couloir de transport (16) présentant deux rails (15) s'étendant dans la direction longitudinale du couloir de transport pour le chariot de transport (20), le couloir de transport (16) présentant en outre au moins une entretoise transversale (19) s'étendant dans la direction transversale du couloir de transport (16), reliant les rails (15) entre eux, **caractérisée en ce qu'**au moins l'un des rails (15) présente un profilé en U ouvert vers le bas, l'entretoise transversale (19) étant passée à travers une branche intérieure (30) du profilé en U et s'étendant en outre jusqu'à une branche extérieure (31) du profilé en U.

2. Installation selon la revendication 1, dans laquelle l'entretoise transversale (19) est reliée à la branche extérieure (31) du profilé en U au moyen d'une liaison d'assemblage.

3. Installation selon la revendication 1 ou 2, dans laquelle l'entretoise transversale (19) est traversée par une ouverture de passage se trouvant dans la branche intérieure (30) du profilé en U, l'ouverture de passage étant agencée, à partir d'un côté inférieur du profilé en U, à une hauteur qui est comprise entre 5 % et 80 % d'une longueur de branche du profilé en U, de préférence entre 10 % et 60 %, de préférence encore entre 20 % et 40 % de la longueur de branche.

4. Installation selon l'une quelconque des revendications 1 à 3, dans laquelle le profilé en U présente au moins l'une quelconque des caractéristiques suivantes :
- une largeur mesurée le long de la direction transversale, qui est comprise entre 20 mm et 100 mm, de préférence entre 40 mm et 80 mm, de préférence encore entre 50 mm et 70 mm ;
- une épaisseur comprise entre 2 mm et 10 mm, de préférence entre 3 mm et 8 mm, de préférence encore entre 4 mm et 6 m ;
- une hauteur totale comprise entre 80 mm et 200 mm, de préférence entre 100 mm et 160 mm, de préférence encore entre 120 mm et 140 mm.

5. Installation selon l'une quelconque des revendications 1 à 4, dans laquelle un espace libre est présent à l'intérieur du profilé en U et en dessous de l'entretoise (19), dans lequel est agencé un dispositif d'éclairage s'étendant de préférence dans la direction longitudinale pour éclairer un plan du châssis se trouvant en dessous du couloir de transport (16).

6. Installation selon l'une quelconque des revendications 1 à 5, dans laquelle un espace libre est présent à l'intérieur du profilé en U, en dessous de l'entretoise (19), dans lequel est agencé un dispositif de fixation (29) s'étendant dans la direction longitudinale pour accrocher un équipement de protection et/ou un outil.

7. Installation selon l'une quelconque des revendications 1 à 6, dans laquelle l'entretoise transversale (19) est reliée à la branche intérieure (30) du profilé en U par une liaison d'assemblage.

8. Installation selon l'une quelconque des revendications 1 à 7, dans laquelle le couloir de transport (16) présente une pluralité d'entretoises transversales (19) espacées longitudinalement, reliant les rails (15) entre eux, de préférence deux entretoises transversales (19) voisines portant chacune un élément de bande de roulement (18).

9. Installation selon l'une quelconque des revendications 1 à 8, dans laquelle l'entretoise transversale (19) est formée par un profilé en chapeau présentant un couvercle (19a), deux parois latérales (19b) faisant saillie vers le bas à partir du couvercle et deux surfaces d'appui (19c) faisant saillie à partir des parois latérales (19b) dans la direction longitudinale du couloir de transport, le couvercle (19a) dépassant des parois latérales (19b) et des surfaces d'appui (19c) dans la direction transversale du couloir de transport (16) et traversant la branche intérieure (30) du profilé en U et étant relié à une branche extérieure (31) du profilé en U au moyen d'une liaison d'assemblage.

10. Installation selon la revendication 9, dans laquelle le profilé en chapeau présente au moins l'une quelconque des autres caractéristiques :
- une largeur du profilé en chapeau est comprise entre 80 mm et 300 mm, de préférence entre 120 et 200 mm, de préférence encore entre 140 mm et 160 mm ;
- une hauteur du profilé en chapeau est comprise entre 15 mm et 60 mm, de préférence entre 20 mm et 50 mm, de préférence encore entre 30 mm et 40 mm ;
- une largeur du couvercle est comprise entre 40 mm et 160 mm, de préférence entre 60 mm et 100 mm, de préférence encore entre 75 et 95 mm.

11. Installation selon l'une quelconque des revendications 9 ou 10, dans laquelle le couloir de transport (16) présente une pluralité de profilés en chapeau (19) espacés les uns des autres dans la direction longitudinale, reliant les rails (15) entre eux, de préférence deux profilés en chapeau (19) voisins portant chacun un élément de surface de roulement (18), les éléments de surface de roulement (18) reposant en outre de préférence sur les surfaces d'appui (19c) de profilés en chapeau (19) voisins.

12. Installation selon l'une quelconque des revendications 1 à 11, dans laquelle une distance mesurée dans la direction longitudinale entre les entretoises (19) est comprise entre 20 et 100 cm, de préférence entre 25 et 75 cm, de préférence encore entre 30 et 50 cm.

13. Installation selon l'une quelconque des revendications 1 à 12, dans laquelle l'entretoise transversale (19) est insérée dans une ouverture de passage (35) dans la branche extérieure (31) du profilé en U, la liaison d'assemblage étant réalisée entre une surface périphérique de l'ouverture de passage (35) et l'entretoise transversale (19).

14. Installation selon l'une quelconque des revendications 1 à 13, dans laquelle un rail (15) est formé d'une pluralité de sections de rail (15a, 15b) juxtaposées dans la direction longitudinale, l'installation présentant de préférence une pluralité de profilés de montant (14), une section de rail (15a, 15b) étant reliée à deux profilés de montant (14) adjacents au moyen de deux liaisons à brides (28).

15. Installation selon la revendication 14, dans laquelle des sections de rail (15a, 15b) voisines présentent, dans la zone d'une surface de roulement du rail (15), une arête d'about (36) au niveau de laquelle des sections de rail (15a, 15b) voisines s'appliquent l'une contre l'autre, l'arête d'about (36) formant un angle avec la direction transversale du couloir de transport, qui est compris entre 20° et 80°, de préférence entre 30° et 70°, l'arête d'about (36) étant en outre formée de préférence par une saillie d'une section de rail (15b) qui s'engage dans un évidement correspondant de l'autre section de rail (15a).
